# EUROPEAN PATENT SPECIFICATION

(11) **EP 4 336 222 B1**
(45) Date of publication and mention of the grant of the patent: **08.07.2026**
(21) Application number: 22798818.5
(22) Date of filing: 01.03.2022
(51) Int. Cl.: G01S 19/44

(54) **POSITIONING DEVICE, POSITIONING METHOD, AND POSITIONING PROGRAM**
POSITIONIERUNGSVORRICHTUNG, POSITIONIERUNGSVERFAHREN UND POSITIONIERUNGSPROGRAMM
DISPOSITIF, PROCÉDÉ ET PROGRAMME DE POSITIONNEMENT

(30) Priority: 06.05.2021 JP 2021078676
(43) Date of publication of application: 13.03.2024
(73) Proprietor: Furuno Electric Co., Ltd., Nishinomiya-City, Hyogo 662-8580 (JP)
(72) Inventor: ENDO, Masaaki, Nishinomiya-City, Hyogo 6628580 (JP)
(74) Representative: Cleveland Scott York
(86) International application number: PCT/JP2022/008558
(87) International publication number: WO 2022/234711

(56) References cited:
- WO-A1-2015/099194
- ES-T3- 2 603 265
- US-A1- 2011 140 959
- US-A1- 2011 187 590
- US-A1- 2020 209 407
- US-A1- 2020 209 407
- US-B2- 10 281 587

## Description

The present disclosure relates to a technique for performing position measurement using carrier phases of a position measurement signal.

Japanese Patent Application Laid-Open No. 2014 -206502 discloses a position measurement technique using carrier phases.

US 10,281,587 B2 discloses techniques for generating regional correction information to be used to correct observations of at least one global or regional NSS receiver for a positioning process. By using a global ionosphere model and its accuracy indicator, the PPP convergence times are reduced.

However, in a conventional device configured to perform position measurement using carrier phases, it is not possible to know the time until highly accurate position measurement starts, in other words, the time until the ambiguity of the position measurement converges.

Therefore, an objective of the present disclosure is to estimate a time until highly accurate position measurement starts.

According to one aspect of the present invention, there is provided a positioning device as recited in claim 1.

According to another aspect of the invention, there is provided a positioning method as recited in claim 11.

According to a further aspect of the invention, there is provided a positioning program as defined in claim 13.

Preferred features of the invention are recited in the dependent claims.

A positioning device of the present disclosure includes a position measurement module and an estimation module. The position measurement module performs position measurement using the carrier phases of the plurality of position measurement signals to calculate a position measurement result and an accuracy index of the position measurement result. The estimation module estimates a convergence prediction time of the position measurement based on the accuracy index.

In this configuration, by utilizing the fact that the accuracy of the position measurement increases as the convergence approaches, the convergence prediction time of the position measurement is accurately estimated.

According to the present disclosure, it is possible to estimate a time until highly accurate position measurement starts.

Embodiments of the present disclosure will now be described with reference to the drawings, in which:
FIG. 1 is a functional block diagram of a positioning device according to an embodiment of the present disclosure.
FIG. 2 is a graph illustrating an example of a time transition of a horizontal error, a horizontal error prediction value, and a convergence prediction time in an estimation calculation of position measurement.
FIG. 3 is a flowchart illustrating a method of estimating a convergence prediction time of a position measurement according to an embodiment of the present disclosure.
FIG. 4 is a flowchart illustrating a first aspect of estimation of a convergence prediction time based on an accuracy index.
FIG. 5 is a flowchart illustrating a second mode of estimation of a convergence prediction time based on an accuracy index.
FIG. 6 is a flowchart illustrating a third aspect of estimation of a convergence prediction time based on an accuracy index.

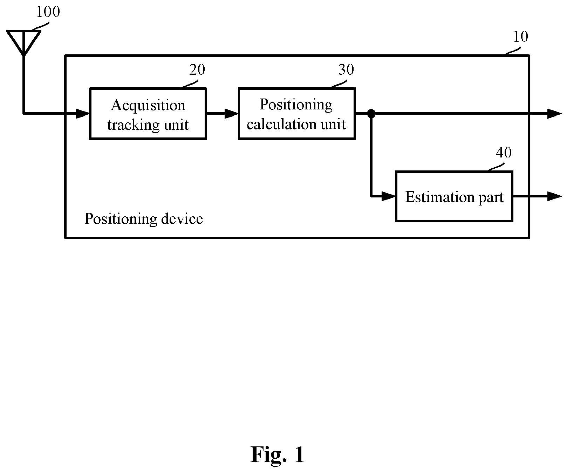

A position measurement technique according to an embodiment of the present disclosure will be described with reference to the drawings. FIG. 1 is a functional block diagram of a positioning device according to an embodiment of the present disclosure.

As illustrated in FIG. 1, the positioning device 10 includes an acquisition and tracking module 20, a position measurement module 30, and an estimation module 40. The positioning device 10 is realized by, for example, an arithmetic processing device such as a predetermined electronic circuit or a CPU, a program in which processing executed by the positioning device 10 is described, and a storage medium that stores the program.

An antenna 100 is connected to the positioning device 10. The antenna 100 receives position measurement signals from a plurality of positioning satellites (GNSS: Global Navigation Satellite System). The antenna 100 outputs the received position measurement signal to the acquisition and tracking module 20.

The acquisition and tracking module 20 includes a correlation processing module. The acquisition and tracking module 20 has the same configuration as that of the positioning device already filed by the applicant. Therefore, the description of the specific configuration and processing of the acquisition and tracking module 20 will be omitted.

The acquisition and tracking module 20 generates replica signals for a plurality of position measurement signals and performs correlation processing with the received position measurement signals. At this time, the acquisition and tracking module 20 calculates a code phase measurement value and carrier phases measurement value. The code phase measurement value is a phase difference between the code of the received position measurement signal and the code of the replica signal, and the carrier phases measurement value is a phase difference between the carrier of the received position measurement signal and the carrier of the replica code. The acquisition and tracking module 20 sequentially performs correlation processing and sequentially outputs the code phase measurement value and the carrier phases measurement value to the position measurement module 30.

The position measurement module 30 sets a state estimation equation in which carrier phases measurement value of a plurality of position measurement signals are used as an observation value, and the position of the positioning device 10, the clock error, and the carrier ambiguity are used as an estimation values. The carrier ambiguity includes "real value bias" and "integer value bias". The state estimation equation is, for example, a Kalman filter.

The position measurement module 30 estimates the position, the clock error, and the carrier ambiguity as the estimation calculation of the position measurement using the state estimation equation. At this time, the position measurement module 30 calculates the accuracy index of the estimation calculation during the estimation calculation. For example, in the case of the above-described Kalman filter, the accuracy index is an error covariance matrix used in the Kalman filter.

By using the carrier phases measurement value for the estimation calculation of position measurement, the position measurement module 30 can estimate the position measurement result (For example, the position of the positioning device 10.) with higher accuracy than by using the code phase. However, since the position measurement using the carrier phases measurement value includes, for example, the carrier ambiguity, the position measurement has the ambiguity at the initial stage of the start of the position measurement. In the period having this ambiguity, the estimation accuracy is not high.

Therefore, the estimation calculation using the carrier phases measurement value takes time until the highly accurate position measurement starts, but after the carrier ambiguity is determined and the position measurement converges, the highly accurate position measurement can be continuously executed.

Therefore, the position measurement module 30 detects convergence of the position measurement based on the accuracy index. For example, when the accuracy index is an error covariance matrix, the error of the estimation calculation result increases as the accuracy index increases.

Therefore, in such a case, the position measurement module 30 sets a threshold for convergence detection for the accuracy index. The threshold value for convergence detection is set by, for example, the upper limit value of the accuracy index when the estimation calculation result falls within a predetermined error range according to the specification of the positioning device 10. When detecting that the accuracy index is equal to or less than the threshold for convergence detection, the position measurement module 30 detects that the position measurement has converged.

Then, for example, the position measurement module 30 does not output the estimation calculation result of the position measurement until the convergence of the position measurement is detected, and outputs the estimation calculation result of the position measurement when the convergence of the position measurement is detected. For example, when detecting the convergence of the position measurement, the position measurement module 30 outputs at least the position of the positioning device 10 in the estimation calculation result of the position measurement to, for example, a display or the like.

The position measurement module 30 sequentially outputs the accuracy index to the estimation module 40 during the estimation calculation of the position measurement described above.

The estimation module 40 estimates the predicted convergence time of the position measurement based on the accuracy index.

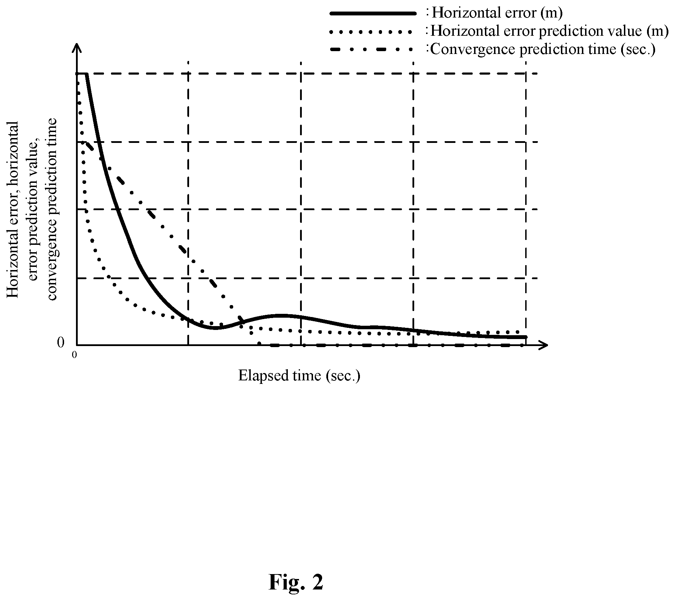

FIG. 2 is a graph illustrating an example of a time transition of a horizontal error, a horizontal error prediction value, and a convergence prediction time in an estimation calculation of position measurement. The convergence prediction time means the remaining time from that time point until convergence of the estimation calculation is detected. In FIG. 2, the vertical axis represents a horizontal error, a horizontal error prediction value, and a convergence prediction time, and the horizontal axis represents an elapsed time from the start of position measurement. In the vertical axis of FIG. 2, the horizontal error, the horizontal error prediction value, and the convergence prediction time have different scales and units, but are set on the same vertical axis for convenience of illustration.

As illustrated in FIG. 2, the horizontal error and the horizontal error prediction value gradually decrease as the estimation calculation of the position measurement progresses (as time elapses). That is, the accuracy of the estimation calculation result of the position measurement is improved as time elapses. Therefore, the convergence prediction time becomes shorter as the time from the start of position measurement elapses.

Then, the horizontal error prediction value only decreases as time elapses, and the convergence prediction time also decreases in accordance with the decrease in the horizontal error prediction value. That is, the horizontal error prediction value and the convergence prediction time have a one-to-one relationship, and the convergence prediction time can be estimated by using the horizontal error prediction value.

Here, the horizontal error prediction value is based on the accuracy index. For example, when the above-described Kalman filter is used, the horizontal error prediction value is obtained from the error covariance matrix. The horizontal error prediction value and the value of the error covariance matrix have a one-to-one relationship.

Therefore, the convergence prediction time can be estimated by using an accuracy index such as an error covariance matrix.

Using this, the estimation module 40 stores the relationship between the accuracy index and the convergence prediction time in a database or stores a calculation formula for calculating the convergence prediction time using the accuracy index. When the accuracy index is input, the estimation module 40 estimates the convergence prediction time using the database or the calculation formula. More specifically, the estimation module 40 estimates the convergence prediction time using the database or the calculation formula such that the convergence prediction time becomes shorter as the accuracy index becomes smaller, in other words, such that the convergence prediction time becomes longer as the accuracy index becomes larger.

By performing such processing, the estimation module 40 can accurately estimate and output the predicted convergence time of the position measurement, in other words, the time until the start of highly accurate position measurement.

As described above, by using the configuration and the processing of the present embodiment, the positioning device 10 can accurately estimate and output the time (convergence prediction time) until the start of highly accurate position measurement while performing highly accurate position measurement.

### (Estimation Method of Convergence Prediction Time)

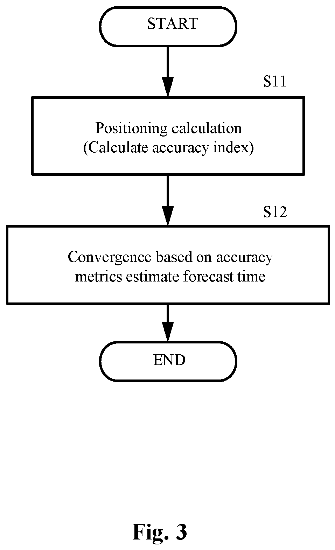

FIG. 3 is a flowchart illustrating a method of estimating a convergence prediction time of a position measurement according to an embodiment of the present disclosure. Note that the specific contents of each process described in the flow of FIG. 3 are described in the description of the above-described configuration and process, and the description thereof will be omitted below except for a portion where additional writing is necessary.

The position measurement module 30 performs position measurement using the carrier phases measurement values of the plurality of position measurement signals and calculates an accuracy index (S11). The estimation module 40 estimates the convergence prediction time based on the accuracy index (S12).

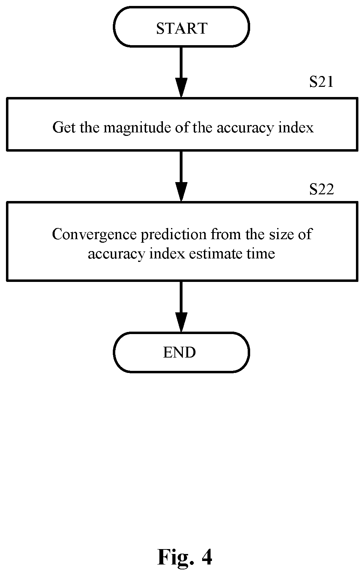

More specifically, the estimation of the convergence prediction time based on the accuracy index is realized by the following flow illustrated in FIG. 4. FIG. 4 is a flowchart illustrating a first aspect of the estimation of the convergence prediction time based on the accuracy index.

The estimation module 40 acquires the size of the accuracy index (S21). The estimation module 40 estimates the convergence prediction time from the scale of the accuracy index (S22). For example, when the accuracy index decreases as the estimation error decreases, the estimation module 40 estimates the convergence prediction time to be shorter as the accuracy index decreases.

The convergence prediction time can also be estimated by the following method.

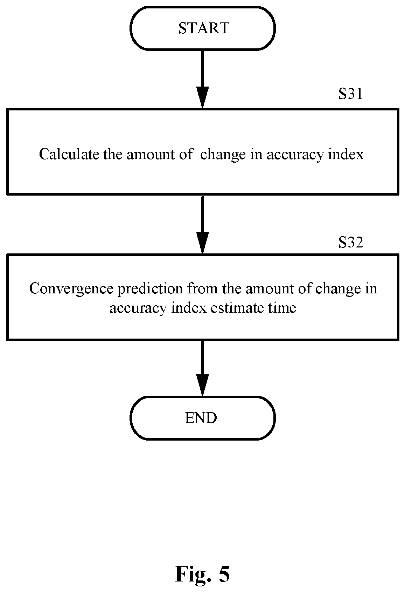

FIG. 5 is a flowchart illustrating a second aspect of the estimation of the convergence prediction time based on the accuracy index.

**In** the second aspect of the estimation of the convergence prediction time illustrated in FIG. 5, the convergence prediction time is estimated based on the change amount of the accuracy index. The change amount of the accuracy index is, for example, a difference of the accuracy index between two times having a predetermined time difference, or a value obtained by dividing the difference by the time difference.

As illustrated in FIG. 2, the temporal change amount of the horizontal error prediction value corresponding to the accuracy index gradually changes from the start of position measurement toward the convergence time of the position measurement. Therefore, the convergence prediction time can be estimated based on the temporal change amount of the accuracy index.

The estimation module 40 calculates the amount of change in the accuracy index (S31). The estimation module 40 estimates the convergence prediction time from the change amount of the accuracy index (S32). For example, when the change amount of the accuracy index decreases as the estimation error decreases, the estimation module 40 estimates the convergence prediction time to be shorter as the change amount of the accuracy index decreases.

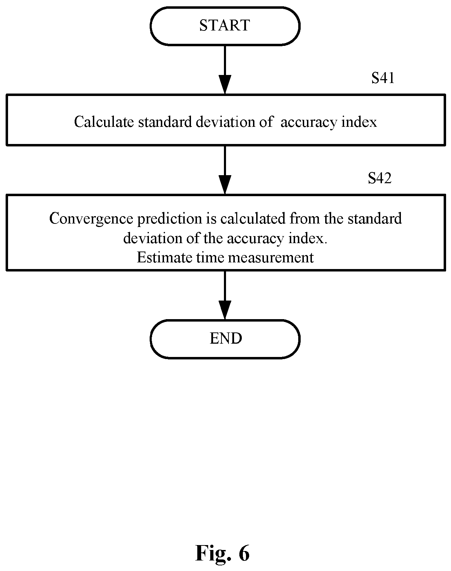

FIG. 6 is a flowchart illustrating a third aspect of the estimation of the convergence prediction time based on the accuracy index.

In the third aspect of the estimation of the convergence prediction time illustrated in FIG. 6, the convergence prediction time is estimated based on the standard deviation of the accuracy index. The standard deviation of the accuracy index is calculated, for example, using the accuracy index for a plurality of times within a predetermined time.

As described above, the position measurement is gradually stabilized, and the error of the position measurement decreases as the position measurement approaches convergence. Therefore, as the position measurement approaches convergence, the variation in the accuracy index tends to decrease. Therefore, the convergence prediction time can be estimated based on the variation of the accuracy index. As an example of the value indicating the specific variation, the convergence prediction time can be estimated based on the standard deviation of the accuracy index.

The estimation module 40 calculates the standard deviation of the accuracy index (S41). The estimation module 40 estimates the convergence prediction time from the standard deviation of the accuracy index (S42). For example, when the standard deviation of the accuracy index decreases as the estimation error decreases, the estimation module 40 estimates the convergence prediction time to be shorter as the standard deviation of the accuracy index decreases.

In this process, the standard deviation is used as the value indicating the variation. However, it is also possible to use another value indicating the variation of the accuracy index, for example, variance or the like.

By using the second mode illustrated in FIG. 5 and the third mode illustrated in FIG. 6, the convergence prediction time can be estimated without being affected by the absolute size of the accuracy index. For example, it is conceivable that the accuracy index does not become smaller than the predetermined value even after convergence of the position measurement depending on the position of the positioning satellite that transmits the position measurement signal. Even in such a case, the estimation module 40 can accurately estimate the convergence prediction time by adopting the change amount or the variation.

In addition, in the above description, an aspect in which the error covariance matrix is used as the accuracy index has been described. However, the accuracy index changes as the position measurement approaches convergence, and other physical quantities may be used as long as the time until convergence and the accuracy index have a one-to-one relationship.

In the first aspect, the second aspect, and the third aspect, the convergence prediction time is based on the value indicating the scale, the change amount, and the variation of the accuracy index, respectively. However, the present disclosure is not limited thereto, and the convergence prediction time may be determined by a combination of the scale, the change amount, and the value indicating the variation of the accuracy index. For example, the convergence prediction time may be calculated from the scale of the accuracy index, and the calculated convergence prediction time may be corrected using the value indicating the variation.

Further, for example, the position information itself can be used as the accuracy index. For example, in the case of a stationary point, a value indicating the amount of change and variation in position can be used as it is as an accuracy index. That is, when the value indicating the amount of change or the variation of the position is small, it is considered that the position is converged near the correct position, and thus this can be used.

### [List of Reference Numerals]

10: Positioning Device
20: Acquisition and Tracking Module
30: Position Measurement Module
40: Estimation Module
100: Antenna

## Claims

1. A positioning device (10) comprising:
a position measurement module (30) configured to perform position measurement using carrier phases of a plurality of position measurement signals to calculate a position measurement result and an accuracy index of a state estimation equation used to calculate the position measurement result; and
an estimation module (40) configured to estimate a predicted convergence time of the position measurement based on the accuracy index.

2. The positioning device (10) according to claim 1, wherein
the estimation module (40) is further configured:
to estimate the convergence prediction time based on a scale of the accuracy index.

3. The positioning device (10) according to claim 2, wherein
the estimation module (40) is further configured:
to estimate the convergence prediction time to be shorter as the accuracy index becomes smaller.

4. The positioning device (10) according to any of the preceding claims, wherein
the estimation module (40) is further configured:
to estimate the convergence prediction time based on a temporal change of the accuracy index.

5. The positioning device (10) according to claim 4, wherein
the estimation module (40) is further configured:
to estimate the convergence prediction time to be shorter as the temporal change amount of the accuracy index is smaller.

6. The positioning device (10) according to any of the preceding claims, wherein
the estimation module (40) is further configured:
to estimate the convergence prediction time based on a value indicating a variation in the accuracy index within a predetermined time.

7. The positioning device (10) according to claim 6, wherein
the estimation module (40) is further configured:
to estimate the convergence prediction time to be shorter as the value indicating the variation of the accuracy index becomes smaller.

8. The positioning device (10) according to any of claims 1 to 7, wherein
the position measurement module (30) is further configured:
to perform the position measurement by a state estimation equation, wherein:
the position of the positioning device (10), a clock error, and a carrier ambiguity are estimation values; and
carrier phases of the plurality of position measurement signals is an observation value; and
the estimation module (40) is further configured:
to use the error variance of the state estimation equation as the accuracy index.

9. The positioning device of any of the preceding claims, wherein the positioning device (10) is arranged to receive the position measurement signals from a plurality of positioning satellites.

10. The positioning device of any of the preceding claims, wherein the state estimation equation is a Kalman filter, and the accuracy index is an error covariance matrix used in the Kalman filter.

11. A positioning method comprising:
performing position measurement using carrier phases of a plurality of position measurement signals to calculate a position measurement result and an accuracy index of a state estimation equation used to calculate the position measurement result; and
estimating a predicted convergence time of the position measurement based on the accuracy index.

12. The positioning method according to claim 11, further comprising:
performing the position measurement by a state estimation equation, wherein:
the position of a positioning device (10), a clock error, and a carrier ambiguity are estimation values; and
the carrier phases of the plurality of position measurement signals are observation values; and
using the error variance of the state estimation equation as the accuracy index.

13. A positioning program comprising instructions which, when the program is executed by a computer, cause the computer to carry out:
performing position measurement using carrier phases of a plurality of position measurement signals to calculate a position measurement result and an accuracy index of a state estimation equation used to calculate the position measurement result; and
estimating a predicted convergence time of the position measurement based on the accuracy index.

14. The positioning program according to claim 13, wherein the instructions further cause the computer to carry out:
performing the position measurement by a state estimation equation, wherein:
the position of the positioning device, a clock error, and a carrier ambiguity are estimation values; and
carrier phases of the plurality of position measurement signals are an observation value; and
using the error variance of the state estimation equation as the accuracy index.

## Patentansprüche

1. Positionsbestimmungsgerät (10), das Folgendes umfasst:
ein Positionsmessmodul (30), konfiguriert zum Durchführen einer Positionsmessung unter Verwendung von Trägerphasen mehrerer Positionsmesssignale, um ein Positionsmessergebnis und einen Genauigkeitsindex einer Zustandsschätzungsgleichung zu berechnen, die zum Berechnen des Positionsmessergebnisses verwendet wird; und
ein Schätzmodul (40), konfiguriert zum Schätzen einer vorhergesagten Konvergenzzeit der Positionsmessung auf der Basis des Genauigkeitsindex.

2. Positionsbestimmungsgerät (10) nach Anspruch 1, wobei
das Schätzmodul (40) ferner konfiguriert ist zum:
Schätzen der Konvergenzvorhersagezeit auf der Basis einer Skala des Genauigkeitsindex.

3. Positionsbestimmungsgerät (10) nach Anspruch 2, wobei
das Schätzmodul (40) ferner konfiguriert ist zum:
Schätzen der Konvergenzvorhersagezeit so, dass sie umso kürzer ist, je kleiner der Genauigkeitsindex wird.

4. Positionsbestimmungsgerät (10) nach einem der vorherigen Ansprüche, wobei
das Schätzmodul (40) ferner konfiguriert ist zum:
Schätzen der Konvergenzvorhersagezeit auf der Basis einer zeitlichen Änderung des Genauigkeitsindex.

5. Positionsbestimmungsgerät (10) nach Anspruch 4, wobei
das Schätzmodul (40) ferner konfiguriert ist zum:
Schätzen der Konvergenzvorhersagezeit so, dass sie umso kürzer ist, je kleiner der zeitliche Änderungsbetrag des Genauigkeitsindex ist.

6. Positionsbestimmungsgerät (10) nach einem der vorherigen Ansprüche, wobei
das Schätzmodul (40) ferner konfiguriert ist zum:
Schätzen der Konvergenzvorhersagezeit auf der Basis eines Wertes, der eine Variation des Genauigkeitsindex innerhalb einer vorbestimmten Zeit angibt.

7. Positionsbestimmungsgerät (10) nach Anspruch 6, wobei
das Schätzmodul (40) ferner konfiguriert ist zum:
Schätzen der Konvergenzvorhersagezeit umso kürzer, je kleiner der die Variation des Genauigkeitsindex angebende Wert wird.

8. Positionsbestimmungsgerät (10) nach einem der Ansprüche 1 bis 7, wobei
das Positionsmessmodul (30) ferner konfiguriert ist zum:
Durchführen der Positionsmessung mittels einer Zustandsschätzungsgleichung, wobei:
die Position des Positionsbestimmungsgeräts (10), ein Taktfehler und eine Trägerambiguität Schätzwerte sind; und
Trägerphasen der mehreren Positionsmesssignale ein Beobachtungswert sind; und
das Schätzmodul (40) ferner konfiguriert ist zum:
Nutzen der Fehlervarianz der Zustandsschätzungsgleichung als Genauigkeitsindex.

9. Positionsbestimmungsgerät nach einem der vorherigen Ansprüche, wobei das Positionsbestimmungsgerät (10) zum Empfangen der Positionsmesssignale von mehreren Positionsbestimmungssatelliten ausgelegt ist.

10. Positionsbestimmungsgerät nach einem der vorherigen Ansprüche, wobei die Zustandsschätzungsgleichung ein Kalman-Filter ist und der Genauigkeitsindex eine im Kalman-Filter verwendete Fehlerkovarianzmatrix ist.

11. Positionsbestimmungsverfahren, das Folgendes beinhaltet:
Durchführen einer Positionsmessung unter Verwendung von Trägerphasen mehrerer Positionsmesssignale, um ein Positionsmessergebnis und einen Genauigkeitsindex einer Zustandsschätzungsgleichung zu berechnen, die zum Berechnen des Positionsmessergebnisses verwendet wird; und
Schätzen einer vorhergesagten Konvergenzzeit der Positionsmessung auf der Basis des Genauigkeitsindex.

12. Positionsbestimmungsverfahren nach Anspruch 11, das ferner Folgendes beinhaltet:
Durchführen der Positionsmessung mittels einer Zustandsschätzungsgleichung, wobei:
die Position eines Positionsbestimmungsgeräts (10), ein Taktfehler und eine Trägerambiguität Schätzwerte sind; und
die Trägerphasen der mehreren Positionsmesssignale Beobachtungswerte sind; und
Nutzen der Fehlervarianz der Zustandsschätzungsgleichung als Genauigkeitsindex.

13. Positionsbestimmungsprogramm, das Befehle umfasst, die bei Ausführung des Programms durch einen Computer den Computer veranlassen, Folgendes durchzuführen:
Durchführen einer Positionsmessung unter Verwendung von Trägerphasen mehrerer Positionsmesssignale, um ein Positionsmessergebnis und einen Genauigkeitsindex einer Zustandsschätzungsgleichung zu berechnen, die zum Berechnen des Positionsmessergebnisses verwendet wird; und
Schätzen einer vorhergesagten Konvergenzzeit der Positionsmessung auf der Basis des Genauigkeitsindex.

14. Positionsbestimmungsprogramm nach Anspruch 13, wobei die Befehle den Computer ferner veranlassen, Folgendes durchzuführen:
Durchführen der Positionsmessung mittels einer Zustandsschätzungsgleichung, wobei:
die Position des Positionsbestimmungsgeräts, ein Taktfehler und eine Trägerambiguität Schätzwerte sind; und
Trägerphasen der mehreren Positionsmesssignale ein Beobachtungswert sind; und
Nutzen der Fehlervarianz der Zustandsschätzungsgleichung als Genauigkeitsindex.

## Revendications

1. Dispositif de positionnement (10) comprenant :
un module de mesure de position (30) configuré pour réaliser une mesure de position au moyen de phases de porteuse d'une pluralité de signaux de mesure de position afin de calculer un résultat de mesure de position et un indice de précision d'une équation d'estimation d'état utilisée pour calculer le résultat de mesure de position ; et
un module d'estimation (40) configuré pour estimer un temps de convergence prédit de la mesure de position sur la base de l'indice de précision.

2. Dispositif de positionnement (10) selon la revendication 1,
le module d'estimation (40) étant en outre configuré pour :
estimer le temps de prédiction de convergence sur la base d'une échelle de l'indice de précision.

3. Dispositif de positionnement (10) selon la revendication 2,
le module d'estimation (40) étant en outre configuré pour :
estimer que le temps de prédiction de convergence diminue à mesure que l'indice de précision baisse.

4. Dispositif de positionnement (10) selon l'une quelconque des revendications précédentes,
le module d'estimation (40) étant en outre configuré pour :
estimer le temps de prédiction de convergence sur la base d'un changement temporel de l'indice de précision.

5. Dispositif de positionnement (10) selon la revendication 4,
le module d'estimation (40) étant en outre configuré pour :
estimer que le temps de prédiction de convergence diminue à mesure que la valeur de changement temporel de l'indice de précision baisse.

6. Dispositif de positionnement (10) selon l'une quelconque des revendications précédentes,
le module d'estimation (40) étant en outre configuré pour :
estimer le temps de prédiction de convergence sur la base d'une valeur indiquant une variation de l'indice de précision dans un délai prédéterminé.

7. Dispositif de positionnement (10) selon la revendication 6,
le module d'estimation (40) étant en outre configuré pour :
estimer que le temps de prédiction de convergence diminue à mesure que la valeur indiquant la variation de l'indice de précision baisse.

8. Dispositif de positionnement (10) selon l'une quelconque des revendications 1 à 7,
le module de mesure de position (30) étant en outre configuré pour :
réaliser la mesure de position par une équation d'estimation d'état,
la position du dispositif de positionnement (10), une erreur d'horloge et une ambiguïté de porteuse étant des valeurs d'estimation ; et
des phases de porteuse de la pluralité de signaux de mesure de position étant une valeur d'observation ; et
le module d'estimation (40) étant en outre configuré pour :
utiliser la variance d'erreur de l'équation d'estimation d'état comme indice de précision.

9. Dispositif de positionnement selon l'une quelconque des revendications précédentes, le dispositif de positionnement (10) étant conçu pour recevoir les signaux de mesure de position en provenance d'une pluralité de satellites de positionnement.

10. Dispositif de positionnement selon l'une quelconque des revendications précédentes, l'équation d'estimation d'état étant un filtre de Kalman, et l'indice de précision étant une matrice de covariance d'erreur utilisée dans le filtre de Kalman.

11. Procédé de positionnement, comprenant les étapes consistant à :
réaliser une mesure de position au moyen de phases de porteuse d'une pluralité de signaux de mesure de position afin de calculer un résultat de mesure de position et un indice de précision d'une équation d'estimation d'état utilisée pour calculer le résultat de mesure de position ; et
estimer un temps de convergence prédit de la mesure de position sur la base de l'indice de précision.

12. Procédé de positionnement selon la revendication 11, comprenant en outre les étapes consistant à :
réaliser la mesure de position par une équation d'estimation d'état,
la position d'un dispositif de positionnement (10), une erreur d'horloge et une ambiguïté de porteuse étant des valeurs d'estimation ; et
les phases de porteuse de la pluralité de signaux de mesure de position étant des valeurs d'observation ; et
utiliser la variance d'erreur de l'équation d'estimation d'état comme indice de précision.

13. Programme de positionnement comprenant des instructions qui, lorsque le programme est exécuté par un ordinateur, amènent l'ordinateur à mettre en œuvre les opérations consistant à :
réaliser une mesure de position au moyen de phases de porteuse d'une pluralité de signaux de mesure de position afin de calculer un résultat de mesure de position et un indice de précision d'une équation d'estimation d'état utilisée pour calculer le résultat de mesure de position ; et
estimer un temps de convergence prédit de la mesure de position sur la base de l'indice de précision.

14. Programme de positionnement selon la revendication 13, les instructions amenant en outre l'ordinateur à mettre en œuvre les opérations consistant à :
réaliser la mesure de position par une équation d'estimation d'état,
la position du dispositif de positionnement, une erreur d'horloge et une ambiguïté de porteuse étant des valeurs d'estimation ; et
des phases de porteuse de la pluralité de signaux de mesure de position étant une valeur d'observation ; et
utiliser la variance d'erreur de l'équation d'estimation d'état comme indice de précision.
